# EUROPEAN PATENT APPLICATION

(11) **EP 2 221 761 A1**
(43) Date of publication of application: **25.08.2010**
(21) Application number: 09358001.7
(22) Date of filing: 04.03.2009
(51) Int. Cl.: G06Q 30/00

(54) **Customer solicitation process and a printed medium therefor**

(30) Priority: 23.02.2009 CA
(71) Applicant: Varibase (Société Anonyme), 13014 Marseille (FR); Varibase Inc., Montreal, QC H3G 2A9 (CA)
(72) Inventor: Azara, Eric, Hampstead, QC H3X 1W9 (CA); Marion, Willy, Montréal, QC H3T 1N4 (CA); Ilardi, René, 13380 Plan de Cuques (FR)
(74) Representative: Marek, Pierre

(57) **Abstract**

A printed medium for the solicitation of a recipient thereof and a customer solicitation process making use thereof are described herein. The printed medium comprises a cover, a back, a first printed element provided on one of the back and the cover including a mailing address of the recipient; and a second printed element provided on one of the back and the cover, the second printed element being personalized to the recipient and including i) at least one publicity targeted to the recipient and ii) a link to a web page. The solicitation process further comprises providing collecting information related to the customer; and sending the printed medium at the mailing address of the customer.

## Description

### BACKGROUND

It is known in the art to personalize the cover of a magazine or the like so as to attract the attention of the subscriber or recipient thereof.

The conventional personalization method includes printing different copies of a periodical, each one with a specific cover including ads or information intended to target a specific group of subscribers. Each copy of the periodical is then printed and the name and of course home address of one of the targeted recipients for this particular copy is printed thereon for delivery.

While this personalization process can be seen as an improvement over the conventional use of a periodical as a marketing and solicitation tool, it has been found to yield limited results.

Moreover, a limitation that face publicists in personalizing printed media such as magazine, newspaper and printed newsletter is in the costs involved in manufacturing a plurality of tailored copies of a periodical, each targeting a specific group of customers.

### SUMMARY

According to a first aspect of the present invention, there is provided a process for the solicitation of a customer comprising:

providing a printed medium for sending to the customer; the printed medium having a cover and a back;

providing a mailing address of the customer onto one of the cover and the back;

collecting information related to the customer;

adding a first printed element to a selected one of the cover and the back; the first printed element being indicative of the information related to the customer so that the selected one of the cover and the back is personalized to the customer;

further adding to one of the cover and the back a second printed element including at least one publicity targeted to the customer using the information related thereto; and

sending the printed medium at the mailing address of the customer.

According to a second aspect of the present invention, there is provided a printed medium for solicitation of a recipient thereof, the printed medium comprising:

a cover;

a back;

a piece of sheet assembled to at least one of the cover and the back;

a first printed element including a mailing address of the recipient; and

a second printed element personalized to the recipient and including i) at least one publicity targeted to the recipient and ii) a communication link coordinate;

one of the first and second printed elements being provided on the piece of sheet and the other one of the first and second printed elements being provided on a selected one of the piece of sheet, the cover and the back.

It is to be noted that the expression "printed medium" is to be construed herein and in the appended claims as any permanent or semi-permanent support suitable to receive printed information thereon including any kind of paper or binded or attached sheets of paper, having printed information thereon, and is intended to include, without limitation, newspaper, magazine, newsletter, prospectus.

The expression "printed element" is to be construed herein and in the appended claims as any textual, graphical or photographical element or a combination thereof, including drawings, which can be included on a page of a printed medium.

The word "publicity" is also to be taken herein and in the appended claims in its broadest interpretation so as to mean any words, images, pictures or a combination thereof intended for selling a good or a service directly or indirectly. This includes, without limitations, advertisements, promotional offers, product placement, corporate logo, etc.

The use of the word "a" or "an" when used in conjunction with the term "comprising" in the claims and/or the specification may mean "one", but it is also consistent with the meaning of "one or more", "at least one", and "one or more than one". Similarly, the word "another" may mean at least a second or more.

As used in this specification and claim(s), the words "comprising" (and any form of comprising, such as "comprise" and "comprises"), "having" (and any form of having, such as "have" and "has"), "including" (and any form of including, such as "include" and "includes") or "containing" (and any form of containing, such as "contain" and "contains"), are inclusive or open-ended and do not exclude additional, unrecited elements.

### BRIEF DESCRIPTION OF THE DRAWINGS

In the appended drawings:

Figure 1 is a perspective schematic view of a printed medium in the form of a magazine according to a first embodiment of the present invention;

Figure 2 is a front view of a the magazine from Figure 1;

Figure 3 is a schematic view of a customer solicitation system according to an embodiment of the present invention;

Figure 4 is a schematic view of a personalized web page, part of the system from Figure 3;

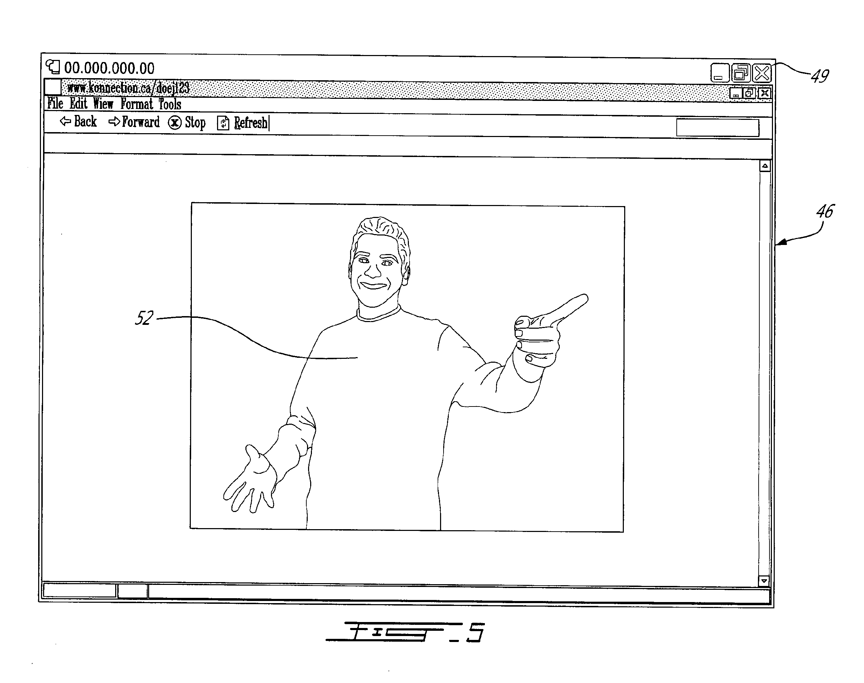

Figure 5 is a flowchart illustrating a customer solicitation process according to an embodiment of the present invention;

Figure 6 is a schematic view of a cover of a magazine according to a second embodiment of the present invention;

Figure 7 is a schematic view of the back of the magazine from Figure 6;

Figure 8 is a schematic view of a cover of a magazine according to a third embodiment of the present invention; and

Figure 9 is a schematic view of a cover of the magazine according to a fourth embodiment of the present invention.

### DETAILED DESCRIPTION

In the following description, similar features in the drawings have been given similar reference numerals, and in order not to weigh down the figures, some elements are not referred to in some figures if they were already identified in a precedent figure.

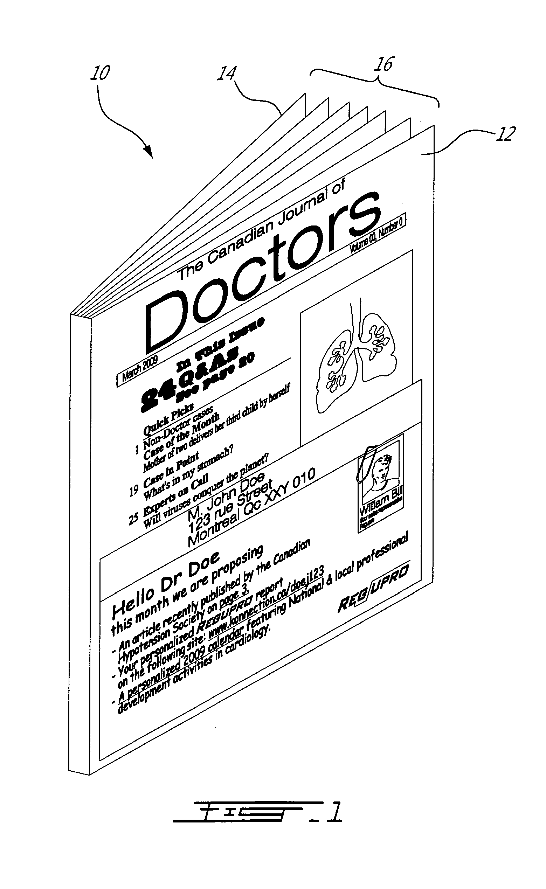

A first embodiment of a printed medium 10 for the solicitation of a recipient is illustrated in Figure 1. According to the first embodiment, the printed medium 10 is in the form of a magazine to be sent to a recipient in the form of a subscriber identified on the cover for mailing purposes.

The magazine 10 comprises a cover 12, a back 14 and a plurality of inner pages 16.

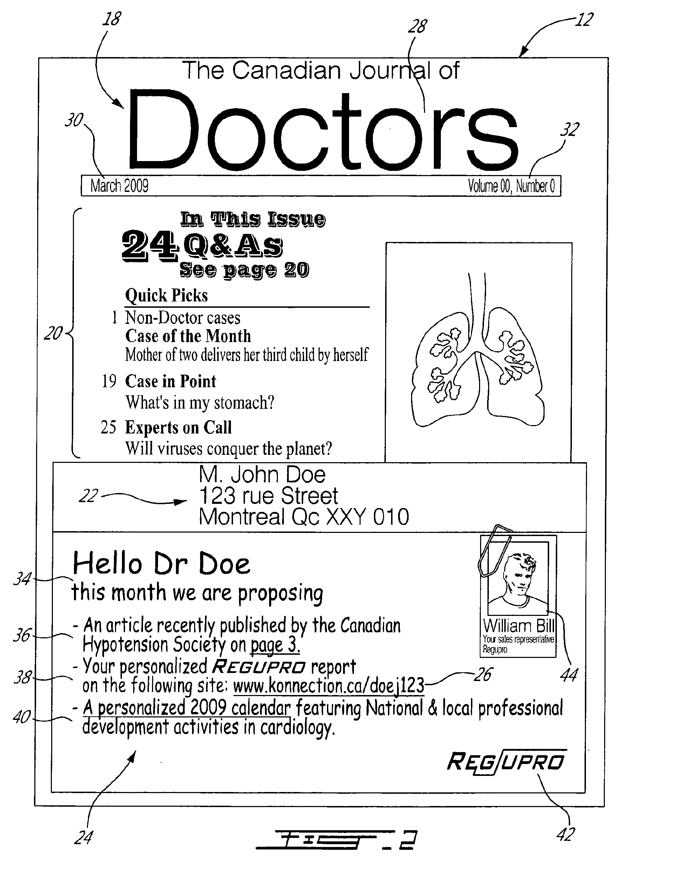

With reference now to Figure 2, the cover 12 of the magazine 10 includes first graphical printed elements 18 identifying the magazine 10, second mixed textual/graphical printed elements 20 presenting the content of the current issue of the magazine 10, third printed elements 22 including the coordinates of the magazine subscriber and fourth printed elements 24 which are personalized to the subscriber and including targeted publicity and a link 26 to a personalized web page 46.

The first graphical printed elements 18 which identify the magazine 10 include the name 28 of the magazine and the issue date 30 and number 32. The nature and format of the magazine identifying elements 18 may of course vary from one magazine or printed medium to the other.

The second printed elements 20 include texts and images summarizing part of the magazine content. A publisher of a printed medium according to a further embodiment (not shown) may decide not to include such second printed elements presenting the printed medium content.

When the printed medium is in the form of one sheet, such printing element presenting content can be omitted and the actual content of the printed medium is provided on the cover and/or back (not shown).

The third printed elements 22 include the name and mailing address of the magazine subscriber. According to the first embodiment, these subscriber coordinates 22 are printed directly onto the magazine cover 12, along with the first, second and fourth digital elements 18-20 and 24 using well-known digital printing technique.

According to a further embodiment (not shown), the coordinates 22 of the subscriber are printed onto a label which is affixed onto the magazine cover or back (not shown) or affixed onto a plastic sleeve (not shown) as will be described furtherin.

Information provided as the coordinates 22 may vary depending of the means of delivery used. For example, only the name or the mailing address may be required in some applications.

According to the first embodiment, the fourth printed elements 24 include a personalized greeting 34 displayed so as to readily attract the attention of the subscriber, followed by a series of text and graphical messages 36-40 addressed thereto and which include personalized publicity. One of the messages 36-40 to the subscriber is an invitation 38 to access a personalized web page 46, which will be described furtherin in more detail. In addition to the personalized publicity included in the messages to the subscriber 36-40, the fourth printed elements includes further advertisement elements 42-44.

The personalized greeting 34 is displayed using bold typeface so as to maximize the visualize impact thereof. Colors, contrast with the background, text positioning, or other well-known marketing technique can be used to highlight the personal greeting.

The messages to the subscriber 36-40 are provided to make the subscriber feel that the magazine has been published especially for him. According to the first embodiment, the messages to the subscriber 36-40 and/or the advertisement 42-44 have been targeted to the subscriber using information related thereto.

This information has been retrieved from a client database (not shown) which associates the mailing address of the subscriber to personal information that can be used by the magazine publisher or the advertiser to personalize the fourth printing elements 24 on the cover 12 or the back 14 of the magazine 10 and create a sense of uniqueness in the publisher/subscriber relationship.

The fourth printing element can be personalized in two ways. Firstly, it can include personal information related to the subscriber. Examples of such personalization are the personalized messages 36-40. Secondly, the personal information retrieved in the client database can be used to target the advertisement to the subscriber's needs and/or taste Examples of this kind of personalization are the advertisement elements 42 and 44.

Example of personal information which can be used to personalize the magazine 10 includes, without limitations, the name of the subscriber, a picture related thereto including his or her picture, responses that he or she gave to a survey including his or her favorite sport and hobby, its city of birth, its occupation, etc.

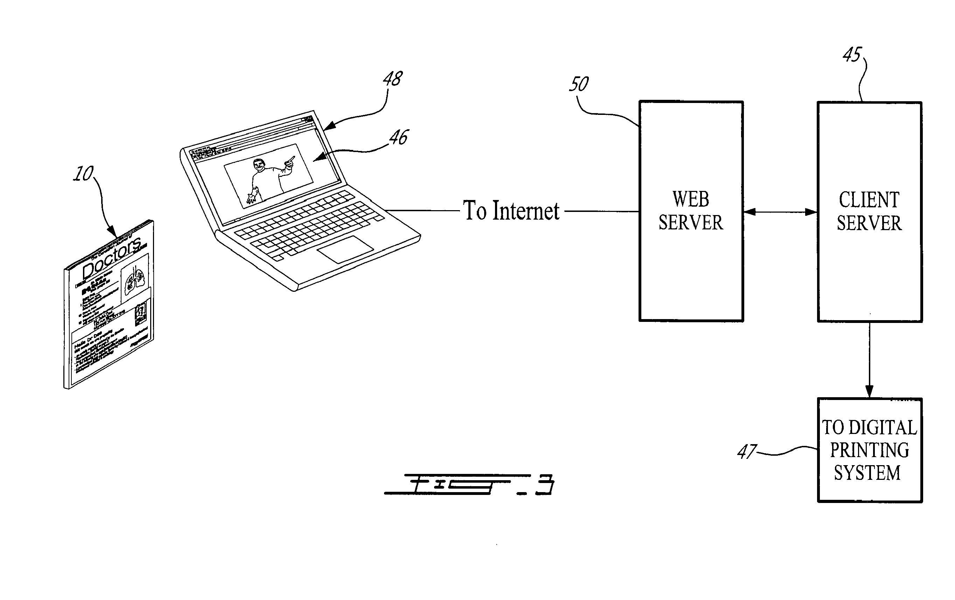

With reference to Figure 3, the client database is created prior to the magazine publishing and printing processes and is stored in a client server 45 or in any other controller having access to a memory. The database is then transferred to or put into communication with a digital printing system 47 so that the version of the magazine 10 corresponding to each subscriber is created. Since such printing and publishing processes are believed to be well-known in the art, and for concision purposes, they will not be described herein in more detail.

The publicity in the fourth printed elements 24, including the advertisements 42-44, concerns the magazine publisher, a sponsor or both. According to the first embodiment, the link to a personalized web page 46 is sponsored by one of the advertiser 42.

The web page 46 can be accessed using a conventional web browser 49 using a personal computer 48, a portable phone, a PDA (Personal Digital Assistant) (both not shown) or any device configured for web browsing.

The expression "web page" should be construed broadly herein in the appended claims as to include any organized collection of information that can be accessed from a specific link on a private or public network. The organized collection of information can be static or dynamic and can include text, sound, picture, image and video medium or any combination thereof.

The web page 46 is hosted on a web server 50 or on any other controller configured for web hosting. The web server 50 is connected to the client server 45 for reasons which will now be described.

The web page 46 includes a personalized video presentation which is conceived so that a presenter 52 seemingly addressed the subscriber accessing its personalized web page 38.

The web page 46 is further configured so that following the video presentation, the subscriber is presented information and/or promotional offers related to the magazine publisher, advertisers, a promoter of the personalized web page or a combination thereof. The web page 36 is part of a web site, or includes a link thereto, which is configured so as to keep track of the pages visited by the subscriber on the web site. According to a further embodiment, the web site is programmed so that it keeps track of other browsing behaviour from the subscriber.

According to a further embodiment, the video presentation is not personalized. According to a still further embodiment, the video presentation is omitted.

According to the first embodiment, information indicative of the pages visited or more generally indicative of the browsing of the user on the web site is stored in the client database on the client server 45 and associated to the subscriber. This additional information can be used to further personalize the printed medium 10 and/or better target the publicity provided to the subscriber on the cover 12 or back 14 of its personalized printed medium 10.

The personalized web page 46 can be programmed differently so as to display other information than a presenting video followed by user menus. For example, a conventional graphical interface programmed using any well-known web programming tool can be shown to the subscriber accessing its personalized web page 46.

Since web page creation, presentation and hosting are believed to be well-known in the art, and for concision purposes, they will not be described furtherin in more detail.

Even though the web and client servers 50 and 45 have been described as two distinct apparatuses, a single server or controller (not shown) can be configured with the combined functionality of both servers 45 and 50.

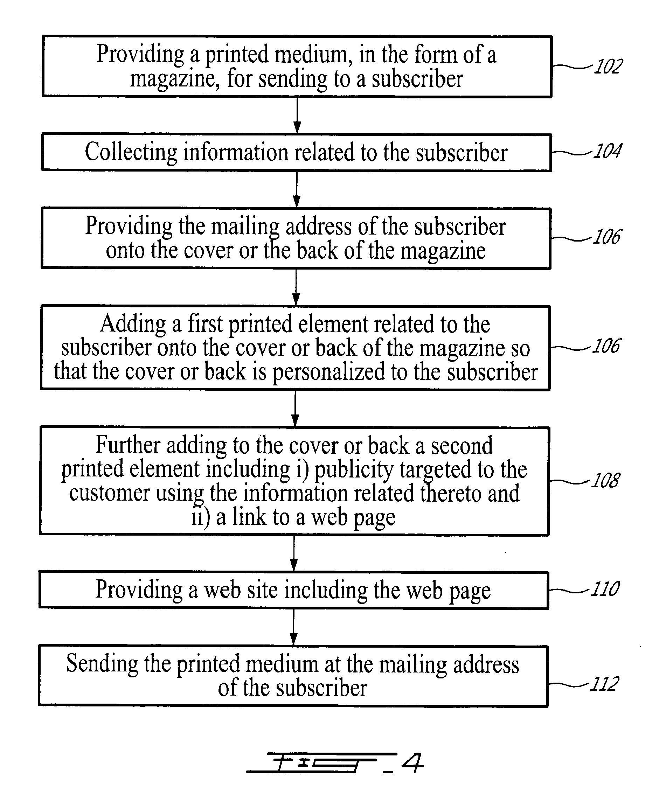

With reference to Figure 4, a customer solicitation process 100 according to a first embodiment is summarized as follows:

102 - providing a printed medium, in the form of a magazine, for sending to a subscriber;

104 - collecting information related to the subscriber;

106 - providing the mailing address of the subscriber onto one of the cover and the back of the magazine;

106 - adding a first printed element related to the subscriber onto the cover or back of the magazine so that the cover or back is personalized to the subscriber;

108 - further adding to the cover or back a second printed element including i) publicity targeted to the customer using the information related thereto and ii) a link to a web page; and

110 - providing a web site including the web page;

112 - sending the printed medium at the mailing address of the subscriber.

Even though the first embodiments of the printed medium 10 and of the process 100 have been described with reference to a personalized magazine 10 that is sent to an actual subscriber thereof, the personalized magazine 10 can be sent to a non-subscriber. The publicity from the fourth printed element is then either from the magazine 10 publisher, from an advertiser or from both.

The use of text and graphical elements for any one of the first, second, third and fourth printed elements 18-24 is for illustration purposes only and any types of printed elements obtained through digital or offset printing for example can be provided.

Even though the first, second third and fourth printed elements 18-24 have been illustrated in Figure 2, as being regrouped on the cover 12, they can be provided mixed together on the cover 12, back 14 or on both.

Also, as will be described with reference to further embodiments of printed media for solicitation of a recipient thereof, providing or adding printed elements on or onto the cover or back should not be construed as the printed elements being printed directly onto the page forming the cover or back. Indeed, the printed element can be printed on an independent support which can be attached, assembled or more generally put into cooperative relationship with the printed media so as to be visible when looking at the cover or back.

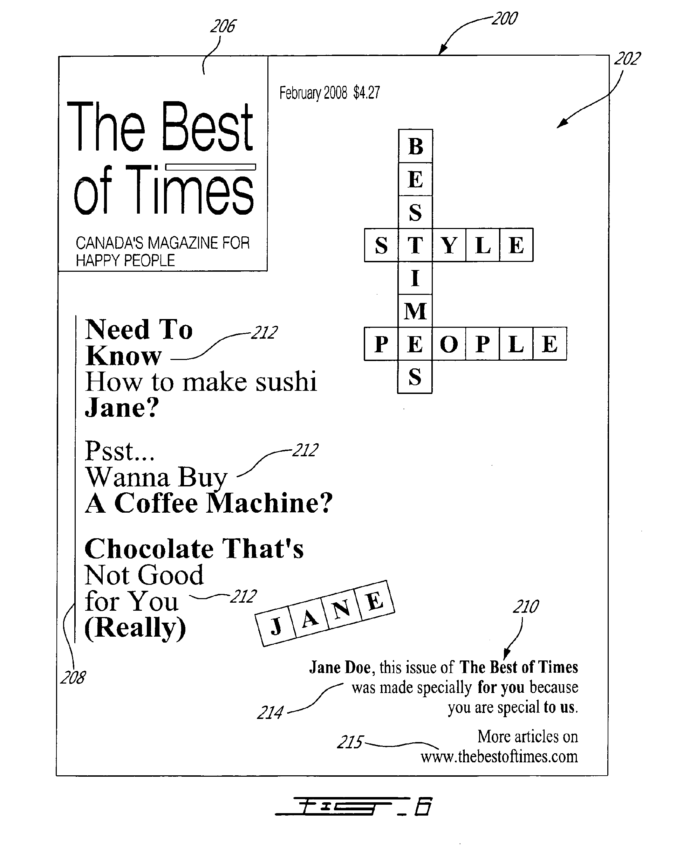

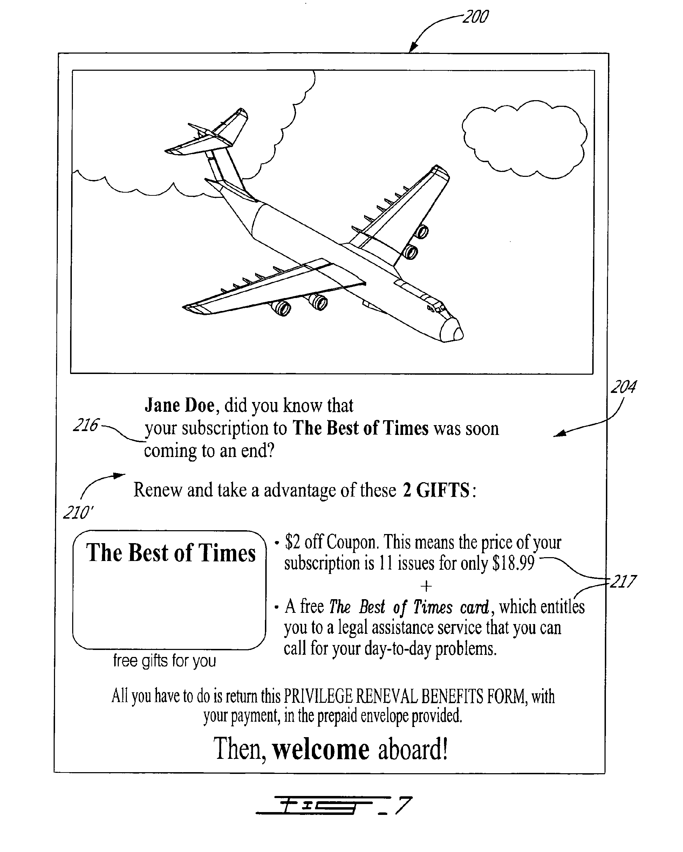

Turning now to Figures 6 and 7, a printed medium 200 for solicitation of a recipient thereof according to a second embodiment will be described. Since the printed medium 200 is similar to the printed medium 10, and for concision purposes, only the differences between the two media 10 and 200 will be described furtherin.

The printed medium 200 is in the form of a magazine having a cover 202 and a back 204 and a plurality of inner pages (not shown).

The cover 202 of the magazine 200, which can be better seen in Figure 6, includes first mixed textual/graphical printed elements 206 identifying the magazine 200, second mixed textual/graphical printed elements 208 presenting the content of the current issue of the magazine 200, and third printed elements 210 which are personalized to the subscriber and including targeted publicity 214 and a link 215 to a web page.

It is to be noted that the printed elements 208 presenting the content according to the second embodiment has been further personalized. This personalization has been achieved by presenting the article titles 212 in the question form and by inserting the recipient name therein.

The back 204 of the magazine 200 further includes third mixed textual/graphical printed elements 210 which are personalized to the magazine recipient and including publicity. According to this second embodiment, the publicity includes advertisement 216 from the magazine publisher offering the recipient to subscribe and including personalized promotional offers 217.

According to a further embodiment of the present invention (not shown), the third printed elements 210 which are personalized to the subscriber and which include targeted publicity and the link 215 to the web page is provided all on the back 204 of the magazine 200.

According to a still further embodiment (not shown), part of these third printed elements are on the cover 202 and the rest is on the back 204. For example, the personalized messages can be on the cover 202 while the address of the web page is listed on the back 204.

According to this second embodiment, the coordinates of the magazine recipient (not shown) is printed on s translucent mailing sleeve (not shown), prior or after the magazine is inserted therein and before mailing to the recipient.

As will now become more apparent from the previous two examples, the web page listed on the cover of the back of the printed media can be personalized or not.

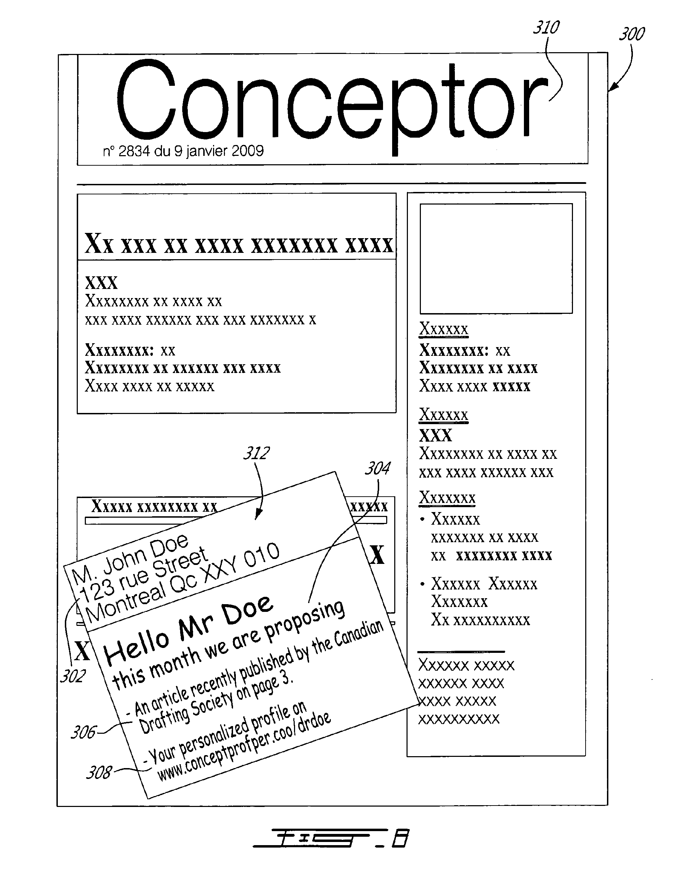

Figure 8 illustrates a printed medium 300 according to third embodiment. Since the printed medium 300 is similar to the printed medium 200, and for concision purposes, only the differences between these two media 300 and 200 will be described herein.

The printed medium 300 is in the form of a printed magazine, wherein the coordinates of the magazine subscriber 302 and the printed elements 304 personalized to the subscriber and including targeted publicity 306 and a link 308 to a personalized web page (not shown) are not directly provided on the cover 310 or the back (not shown).

The coordinates of the subscriber 302 and the printed elements 304 are printed onto a paper tab 312, the top portion of which being glued onto the cover 310.

According to a further embodiment, one of the printed elements 302 and 304 is printed directly onto the cover 310 and the other onto the tab 312.

According to another embodiment (not shown), the tab 312 is made of another material than paper, such as aluminum or other metal foil, cardboard, polymeric sheet, etc.

According to a further embodiment of a printed medium for solicitation of a recipient thereof, the tab 312 is replaced by a piece of a flexible sheet of a printable or engravable material. The sheet can be of any size and thickness as allowed by the magazine printing and shipment processes.

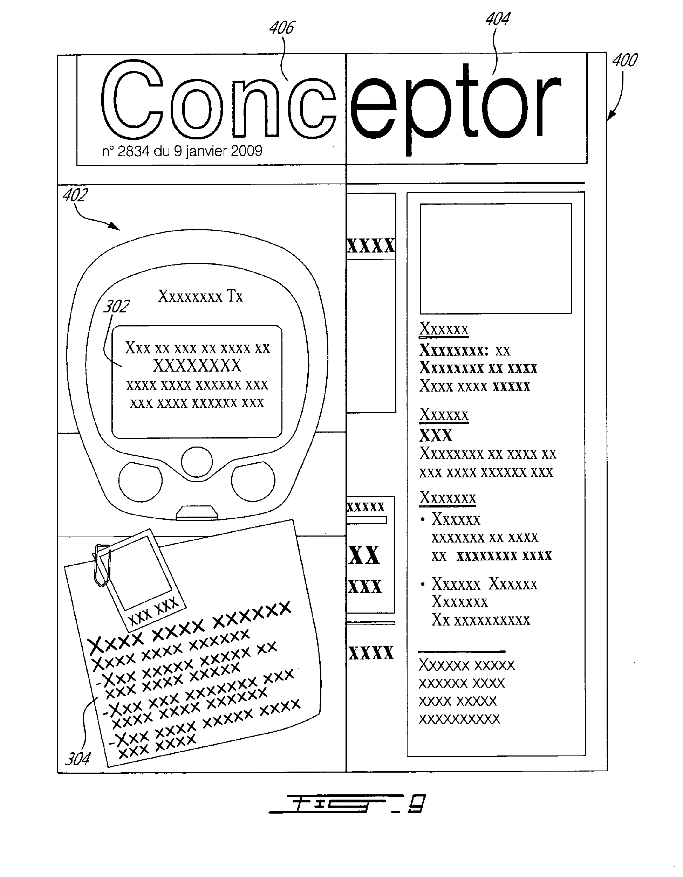

Figure 9 illustrates a magazine 400 according to a fifth embodiment. Since the magazine 400 is similar to the magazine 300, and for concision purposes, only the differences between these two magazines 300 and 400 will be described herein.

The main difference between the magazine 400 and 300 lies in the coordinates of the subscriber 302 and the printed elements 304 being printed onto a half-jacket 402 which is secured to the cover 404 so as to be part of the binding (not shown). Gluing or any other equivalent method can be used to secure the half-jacket 402 to the cover 404 thereon.

Apart from the added personalized information 302 and 304, the half-jacket 402 includes complementary printing elements 406 thereon that generally complement printings on the cover 404 when the half-jacket 402 lies thereon.

According to a further embodiment (not shown), such complementary printing elements 406 are omitted on the half-jacket 402.

The above-described supplementary jacket 402 has been referred to as a half-jacket since it is substantially about half the surface of the cover 404 and it is generally rectangular in shape. However, such supplementary jacket 402 can be of any other configuration and size. It is to be noted that the general expression "half-jacket" will be generally used herein to described such a supplementary jacket, non-withstanding its configuration and size.

It is to be noted that many modifications could be made to the printed media 10, 200, 300 and 400 described hereinabove and illustrated in the appended drawings. For example:
- The printed media are not limited to magazines and can be in the form of newspapers, printed newsletters, etc. The number of pages of the printed media may vary from one to many. It is intended here that in the case of one-sheet printed media, the cover refers to the recto page and the back thereof refers to the verso page;
- The link to a web page referred to hereinabove can be more generally substituted by any other communication link coordinate, such as a coordinate of a predetermined location, person, group, company or others. For example, the phone or facsimile number or web or street address of a store or of a sales representative thereof or of a company can be provided. Similarly to the example of the web page, such communication link coordinate can be personalized or not to the recipient. A plurality of such coordinates can also be provided; and
- Additional personalized printed element, including publicity can further be provided within the printed media, printed or attached to the inner pages thereof.

It is to be understood that the phraseology or terminology used herein is for the purpose of description and not limitation.

## Claims

1. A printed medium for solicitation of a recipient thereof, the printed medium comprising:
a cover;
a back;
a piece of sheet assembled to at least one of the cover and the back;
a first printed element including a mailing address of the recipient; and
a second printed element personalized to the recipient and including i) at least one publicity targeted to the recipient and ii) a communication link coordinate;
one of the first and second printed elements being provided on the piece of sheet and the other one of the first and second printed elements being provided on a selected one of the piece of sheet, the cover and the back.

2. A printed medium as recited in claim 1, wherein the second printed element is personalized to the recipient by including information related thereto.

3. A printed medium as recited in claim 1, wherein the communication link coordinate is personalized.

4. A printed media as recited in claim 1, wherein the communication link coordinate is selected from the group consisting of a link to a web page, a phone number, a facsimile number and an email address.

5. A printed media as recited in claim 1, wherein the communication link coordinate is associated to a message from a sponsor.

6. A printed medium as recited in claim 1, wherein the piece of sheet is in the form of a tab secured to one of the cover and the back.

7. A printed medium as recited in claim 1, wherein the piece of sheet is in the form of a half-jacket bonded to the at least one of the cover and the back so as to partially cover the at least one of the cover and the back.

8. A printed medium as recited in claim 1, wherein the piece of sheet is a surface of a sleeve receiving the printed medium.

9. A printed medium as recited in claim 1, wherein the at least one publicity is related to at least one of a publisher or a sponsor of the printed medium.

10. A printed medium as recited in claim 1 which is in a form selected from the group consisting of a magazine, a newspaper and a newsletter.

11. A printed medium as recited in claim 1, wherein the first and second printed elements include at least one of text, images and pictures.

12. A printed medium as recited in claim 1, wherein the first and second one of the back and the cover are the same.

13. A process for the solicitation of a customer comprising:
providing a printed medium for sending to the customer; the printed medium having a cover and a back;
providing a mailing address of the customer onto one of the cover and the back;
collecting information related to the customer;
adding a first printed element to a selected one of the cover and the back; the first printed element being indicative of the information related to the customer so that the selected one of the cover and the back is personalized to the customer;
further adding to one of the cover and the back a second printed element including at least one publicity targeted to the customer using the information related thereto; and
sending the printed medium at the mailing address of the customer.

14. A process as recited in claim 13, further comprising providing one of the cover and the back of the printed medium with a printed coordinate to a communication link.

15. A process as recited in claim 14, wherein the printed coordinate is at least one of associated to a message from a sponsor and a link to a web page which is part of a web site which is configured so as to collect information related to the browsing of the customer on the web site and wherein the process further comprising adding the information related to the browsing of the customer on the web site to the information related to the customer.
